# EUROPEAN PATENT SPECIFICATION

(11) **EP 3 377 333 B1**
(45) Date of publication and mention of the grant of the patent: **28.10.2020**
(21) Application number: 16861121.8
(22) Date of filing: 04.11.2016
(51) Int. Cl.: B60B 39/12

(54) **VEHICLE RECOVERY LADDER**
LEITER FÜR FAHRZEUGBERGUNG
ÉCHELLE DE RÉCUPÉRATION DE VÉHICULE

(30) Priority: 06.11.2015 AU 2015904551
(43) Date of publication of application: 26.09.2018
(73) Proprietor: Maxtrax Australia Pty Ltd, Brisbane QLD 4000 (AU)
(72) Inventor: MCCARTHY, Bradley John, Brisbane, Queensland 4000 (AU); DAVIDSON, Neil, Brisbane, Queensland 4000 (AU)
(74) Representative: Zeuner Summerer Stütz
(86) International application number: PCT/AU2016/051051
(87) International publication number: WO 2017/075665

(56) References cited:
- EP-B1- 1 943 110
- WO-A1-2017/070740
- AU-A1- 2013 206 349
- JP-A- S62 261 503
- US-A- 3 836 075
- US-A- 3 836 075
- US-A- 3 861 592
- US-A- 4 210 280
- US-A- 5 538 183
- US-A- 5 833 136
- US-B2- 8 231 066
- 'Maxtrax Dentistry - tooth replacement', [Online] 15 June 2015, pages 1 - 5, XP055378644 Retrieved from the Internet: <URL:http://www.pradopoint.com/showthread.p hp?35771-Maxtrax-Dentistry-tooth- replacement> [retrieved on 2016-11-22]

## Description

### TECHNICAL FIELD

The present invention relates to a vehicle recovery ladder. The present invention has particular, although not exclusive application to four-wheel drive (4WD) vehicles.

### BACKGROUND

The reference to any prior art in this specification is not, and should not be taken as an acknowledgement or any form of suggestion that the prior art forms part of the common general knowledge.

Four-wheel drive (4WD) vehicles invariably become stuck in sand and mud. Traditionally, shovels were used to dig and extricate stuck 4WD vehicles. Alternatively, timber could be jammed beneath tyres in an attempt to gain more wheel traction.

A known vehicle recovery ladder disclosed in AU 2010100831 provides improved traction when extricating vehicles. Advantageously, the ladder is light-weight being molded from polymeric material and includes traction members to assist the wheel in climbing out of the mire. However, the Applicant has perceived that the traction members can wear or melt in extreme circumstances, such as the spinning of a wheel, which can severely hamper the ongoing performance of the ladder. Document JP S62 261503A discloses a vehicle recovery ladder according to the preamble of claim 1.

Embodiments of the present invention provide an improved vehicle recovery ladder.

### SUMMARY OF THE INVENTION

According to one aspect of the present invention, there is provided a vehicle recovery ladder according to claim 1.

Advantageously, any damaged traction members may be readily released and replaced to maintain the performance of the ladder.

The traction members may be further bonded to the body with a chemical bond.

The traction members may be configured to not damage the tyre during use. Preferably, the traction members are less durable than a tyre so as to sustain damage before the comparatively more expensive tyre. The traction members may include polymeric material (e.g. elastomer, polyurethane, thermoplastic, nylon). The body may also include polymeric material (e.g. elastomer, polyurethane, thermoplastic, nylon). The traction members may include metal material (e.g. metal alloy), ceramic material or rubber material. In one embodiment, the body and the traction members are each integrally formed (e.g. injection molded) from the same material.

Each traction member may include a rotational release means for rotationally releasing the traction member from the body. The rotational release means may include a thread. The rotational release means may include a tool recess for receiving a release tool. The recess may be hexagonal, pentagonal, octagonal, square, slotted, cross or star shaped.

The ladder may include locks for locking the traction members to the body. Each traction member may include an inhibiter for inhibiting unintentional release of the traction member from the body. The inhibitor may include one or more formations (e.g. tongue, groove, etc.). The inhibitor may include a tongue or groove.

The traction members may be released from the rear of the ladder. Alternatively, the traction members may be released from the top of the ladder. Each traction member may include a skirt from which a tooth extends. Each traction member may be over-molded. Each traction member may include a thread located either above or below the skirt.

According to another aspect of the present invention, there is provided a method for repairing a damaged traction member of a vehicle recovery ladder according to claim 7.

The step of releasing may involve rotating the traction member.

According to another aspect of the present invention, there is provided a method of forming a vehicle recovery ladder according to claim 9.

The method may involve molding the traction members in another mold. The traction members located in the mold may be set prior to molding the body. The traction members may have a lower melting point than the body to facilitate chemical bonding between the traction members and the body.

Any of the features described herein can be combined in any combination with any one or more of the other features described herein within the scope of the invention.

### BRIEF DESCRIPTION OF THE DRAWINGS

Preferred features, embodiments and variations of the invention may be discerned from the following Detailed Description which provides sufficient information for those skilled in the art to perform the invention. The Detailed Description is not to be regarded as limiting the scope of the preceding Summary of the Invention in any way. The Detailed Description will make reference to a number of drawings as follows:
Figure 1a is a plan view of a vehicle ladder in accordance with an embodiment of the present invention;
Figure 1b is a side sectional view of the vehicle ladder of Figure 1a;
Figure 1c is a side view of the vehicle ladder of Figure 1a;
Figure 2 is a close-up sectional view of the circular inset in Figure 1a showing various types of traction members in accordance with embodiments of the present invention;
Figure 3a is an upper perspective view of a first traction member shown in Figure 2;
Figure 3b is a lower perspective view of a first traction member shown in Figure 2;
Figure 4a is an upper perspective view of a second traction member shown in Figure 2;
Figure 4b is a lower perspective view of a second traction member shown in Figure 2;
Figure 5a is an upper perspective view of a third traction member shown in Figure 2; and
Figure 5b is a lower perspective view of a third traction member shown in Figure 2.

### DETAILED DESCRIPTION OF PREFERRED EMBODIMENTS

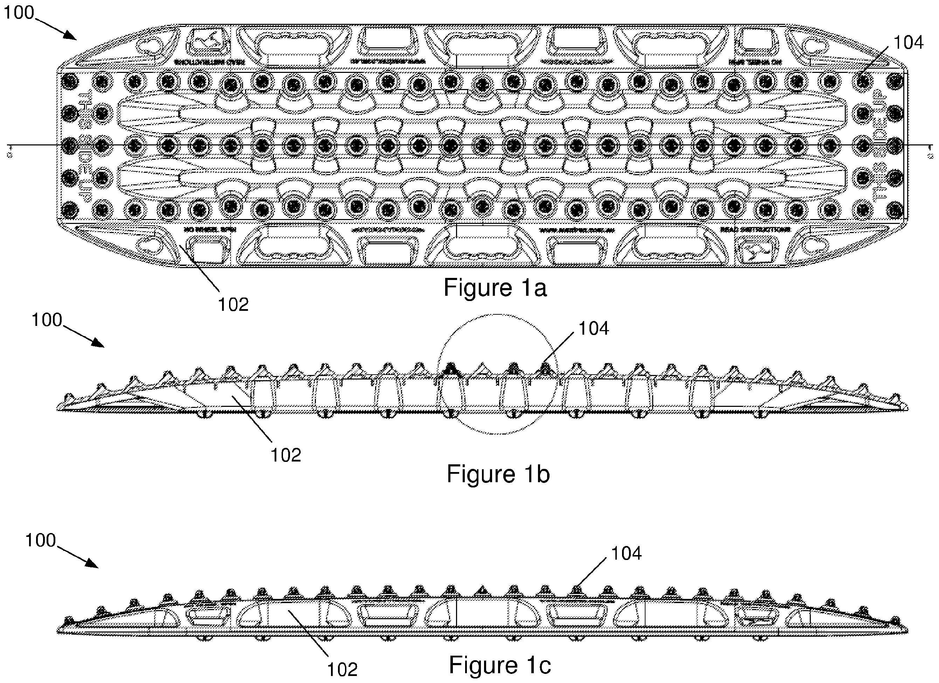

According to an embodiment of the present invention, there is provided a vehicle recovery ladder 100 as shown in Figure 1. The ladder includes an elongate molded body 102, and molded traction members 104 that are releasably fastened to the body 104. The traction members 104 are bonded to the body 102 with a chemical and mechanical bond formed during molding. Advantageously, any damaged traction members 104 can be readily released and replaced to maintain the performance of the ladder 100.

The traction members 104 are normally less durable than a vehicle tyre so as to sustain damage before the comparatively more expensive tyre. The traction members 104 are formed from polymeric material (e.g. elastomer, polyurethane, thermoplastic, nylon). The body 102 is also formed from polymeric material (e.g. elastomer, polyurethane, thermoplastic, nylon). Typically, the body 102 and the traction members 104 are each intergrally formed (e.g. injection molded) from the same material.

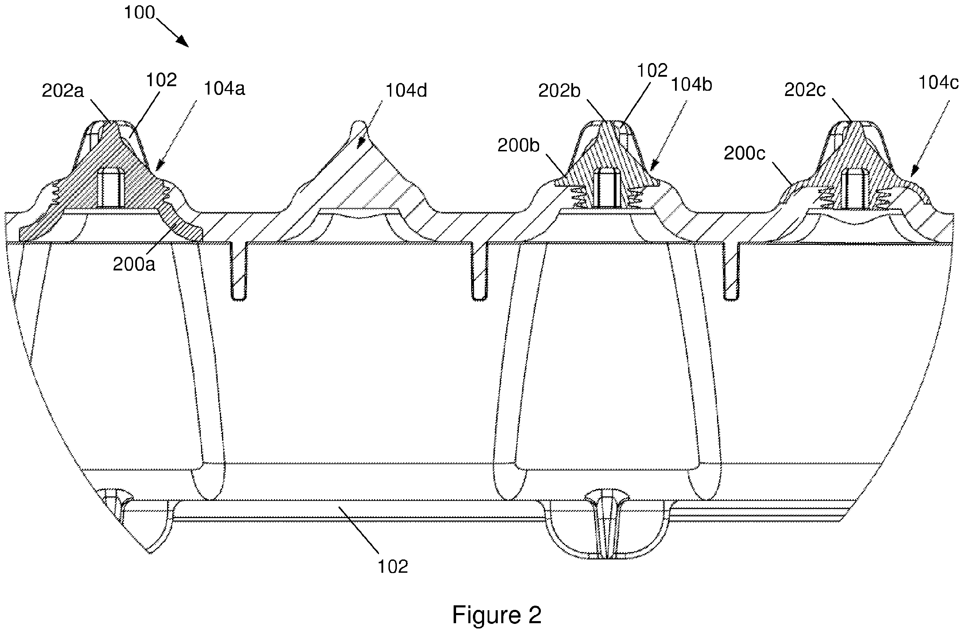

Figure 2 shows four types of traction member 104, namely: novel first, second and third traction members 104a, 104b 104c; and a conventional traction member 104d integrally formed with the body 102. In practice, the ladder 100 would usually consist of the same type of traction member 104.

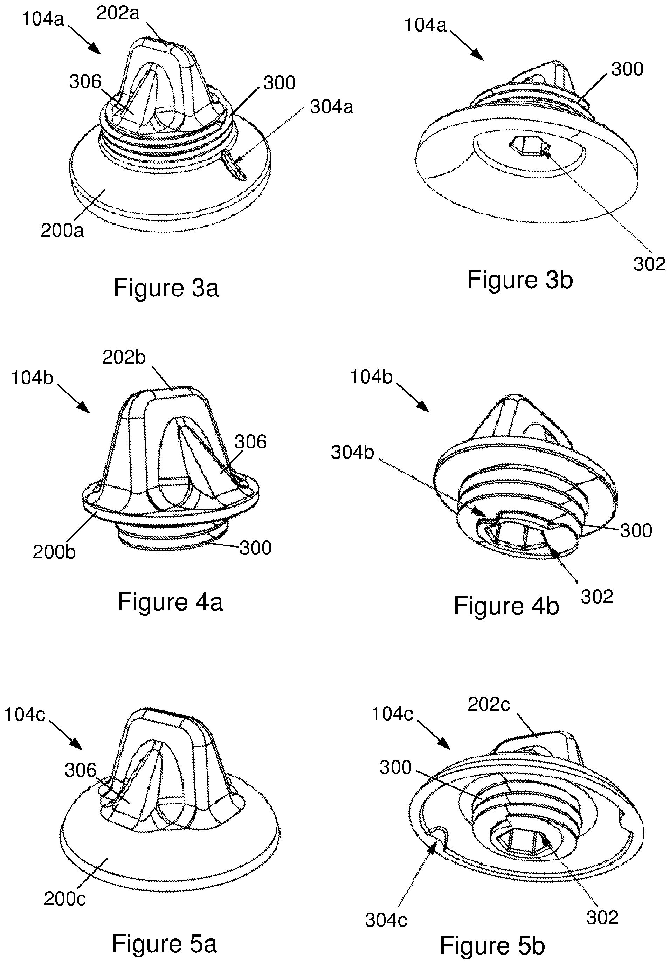

The traction members 104a, 104b 104c can be clearly seen in Figures 3 to 5 respectively. Each traction member 104 includes a rotational release for rotationally releasing the traction member 104 from the body 102. The rotational release includes a thread 300. The rotational release also includes a hexagonal tool recess 302 for receiving a release tool (e.g. Allan key).

The ladder 100 includes tongue-in-groove locks for locking the traction members 104 to the body 102. In particular, each traction member 104 includes an inhibiter 304 for inhibiting unintentional release of the traction member 104 from the body 102. The inhibiter 304a of the first traction member 104a is a topside tongue for sitting in a complementary groove of the body 102. The inhibiter 304b of the second traction member 104b is an underside groove in which a complementary tongue of the body 102 sits. The inhibiter 304c of the third traction member 104c is an underside groove in which a complementary tongue of the body 102 sits.

Returning to Figure 2, the traction member 104a is released from the rear or underside of the ladder 100. Alternatively, the traction members 104b, 104c are released from the topside of the ladder 100. Each traction member 104 includes a broad skirt 200 from which a tooth 202 upwardly extends. Each tooth is flanked by a pair of support fillets 306 (see. Fig 3). As can best be seen in Figure 2, each traction member 104 is over-molded by the body 102 to give increased breadth.

A method of forming the vehicle recovery ladder 100 is now described.

Firstly, the traction members 104 are injection molded in a traction member mold and permitted to set before removal.

Next, the set traction members 104 are positioned in a ladder mold.

Next, the body 102 is injection molded into the ladder mold and a chemical bond forms between the traction members 104 and body 102. A mechanical bond forms with engaging threads of the body 102 and traction members 104. As shown in Figure 2, the body 102 is overmolded over the embedded traction members 104 and forms a complementary thread with the traction members 104. The traction members 104 may have a lower melting point than the body 102 to facilitate chemical bonding between the traction members 104 and the body 102. The chemical bond is formed by crosslinking of the traction member and body materials.

In use, the chemical and mechanical bond is broken when releasing the traction members 104 from the body 102. Another traction member 104 can be threaded into the body 102 to replace a released traction member 104.

A person skilled in the art will appreciate that many embodiments and variations can be made without departing from the scope of the present invention as defined by the appended claims.

The traction members 104 may be formed from metal material (e.g. metal alloy), ceramic material or rubber material.

In one embodiment, the traction members 104 may be formed of a different material to the body 102 to suit the particular application (e.g. hard metal teeth for military operations). The traction members 104 may be permanently bonded to, and not releasable from, the body 102.

The recess 302 may be pentagonal, octagonal, square, slotted, cross or star shaped.

In compliance with the statute, the invention has been described in language more or less specific to structural or methodical features. It is to be understood that the invention is not limited to specific features shown or described since the means herein described comprises preferred forms of putting the invention into effect.

Reference throughout this specification to 'one embodiment' or 'an embodiment' means that a particular feature, structure, or characteristic described in connection with the embodiment is included in at least one embodiment of the present invention. Thus, the appearance of the phrases 'in one embodiment' or 'in an embodiment' in various places throughout this specification are not necessarily all referring to the same embodiment.

## Claims

1. A vehicle recovery ladder (100) including:
a body (102);
traction members (104) for releasably fastening to the body, the traction members including threads (300);
**characterized in that** the body (102) and the traction members (104) are each integrally formed from the same material, and each traction member (104) is over-molded.

2. A vehicle recovery ladder (100) as claimed in claim 1, wherein the traction members (104) are bonded to the body (102) with a chemical and/or mechanical bond.

3. A vehicle recovery ladder (100) as claimed in claim 1, wherein the traction members (104) or body (102) include polymeric material; or wherein the traction members (104) include metal material, ceramic material or rubber material.

4. A vehicle recovery ladder (100) as claimed in claim 1, wherein
- each traction member (104) includes a rotational release means for rotationally releasing the traction member from the body, preferably wherein the rotational release means includes a tool recess for receiving a release tool, or
- wherein the ladder includes locks for locking the traction members to the body.

5. A vehicle recovery ladder (100) as claimed in claim 1, wherein each traction member (104) includes an inhibiter (304) for inhibiting unintentional release of the traction member (104) from the body (102); preferably wherein the inhibitor (304) includes one or more formations such as a tongue or groove.

6. A vehicle recovery ladder (100) as claimed in claim 1, wherein each traction member (104) includes a skirt (200) from which a tooth (202) extends, preferably wherein the thread (300) of each traction member (104) is located either above or below the skirt (200).

7. A method for repairing a damaged traction member (104) of a vehicle recovery ladder (100) according to one of claims 1 to 6, the method involving: releasing the traction member (104) from a body (102) of the ladder (100).

8. A method as claimed in claim 7, wherein the step of releasing involves rotating the traction member.

9. A method of forming a vehicle recovery ladder (100) according to one of claims 1 to 6, the method including the steps of:
locating traction members (104) in a mold; and
molding a body (102) to form a bond with the traction members (104).

## Patentansprüche

1. Fahrzeugbergungsleiter (100), die aufweist:
einen Körper (102);
Traktionselemente (104) zum lösbaren Befestigen an dem Körper, wobei die Traktionselemente Gewinde (300) aufweisen;
**dadurch gekennzeichnet, dass** der Körper (102) und die Traktionselemente (104) jeweils einstückig aus dem gleichen Material gebildet sind und jedes Traktionselement (104) umspritzt ist.

2. Fahrzeugbergungsleiter (100) nach Anspruch 1, wobei die Traktionselemente (104) an den Körper (102) mit einer chemischen und/oder mechanischen Bindung gebunden sind.

3. Fahrzeugbergungsleiter (100) nach Anspruch 1, wobei die Traktionselemente (104) oder der Körper (102) ein Polymermaterial aufweisen; oder wobei die Traktionselemente (104) ein Metallmaterial, Keramikmaterial oder Gummimaterial aufweisen.

4. Fahrzeugbergungsleiter (100) nach Anspruch 1, wobei
- jedes Traktionselement (104) ein Rotationslösemittel zum Rotationslösen des Traktionselements von dem Körper aufweist, wobei das Rotationslösemittel vorzugsweise eine Werkzeugvertiefung zum Aufnehmen eines Lösewerkzeugs aufweist, oder
- wobei die Leiter Verriegelungen zum Verriegeln der Traktionselemente an dem Körper aufweist.

5. Fahrzeugbergungsleiter (100) nach Anspruch 1, wobei jedes Traktionselement (104) eine Verhinderungsvorrichtung (304) zum Verhindern eines unbeabsichtigten Lösens des Traktionselements (104) von dem Körper (102) aufweist; wobei die Verhinderungsvorrichtung (304) vorzugsweise eine oder mehrere Ausbildungen, wie etwa eine Zunge oder eine Nut, aufweist.

6. Fahrzeugbergungsleiter (100) nach Anspruch 1, wobei jedes Traktionselement (104) eine Schürze (200) aufweist, von der sich ein Zahn (202) erstreckt, wobei das Gewinde (300) jedes Traktionselements (104) vorzugsweise über oder unter der Schürze (200) angeordnet ist.

7. Verfahren zum Reparieren eines beschädigten Traktionselements (104) einer Fahrzeugbergungsleiter (100) nach einem der Ansprüche 1 bis 6, wobei das Verfahren umfasst:
Lösen des Traktionselements (104) von einem Körper (102) der Leiter (100).

8. Verfahren nach Anspruch 7, wobei der Schritt des Lösens ein Rotieren des Traktionselements umfasst.

9. Verfahren zum Herstellen einer Fahrzeugbergungsleiter (100) nach einem der Ansprüche 1 bis 6, wobei das Verfahren folgende Schritte umfasst:
Anordnen von Traktionselementen (104) in einer Form; und
Formen eines Körpers (102), um eine Bindung mit den Traktionselementen (104) herzustellen.

## Revendications

1. Échelle de dépannage de véhicule (100) comprenant :
un corps (102) ;
des éléments de traction (104) destinés à être fixés de façon détachable au corps, les éléments de traction comprenant des filetages (300) ;
**caractérisée en ce que** le corps (102) et les éléments de traction (104) sont respectivement constitués intégralement du même matériau, et chaque élément de traction (104) est surmoulé.

2. Échelle de dépannage de véhicule (100) selon la revendication 1, dans laquelle les éléments de traction (104) sont liés au corps (102) par liaison chimique et/ou mécanique.

3. Échelle de dépannage de véhicule (100) selon la revendication 1, dans laquelle les éléments de traction (104) ou le corps (102) comprend/comprennent un matériau polymère ; ou dans laquelle les éléments de traction (104) comprennent un matériau métallique, un matériau céramique ou un matériau de caoutchouc.

4. Échelle de dépannage de véhicule (100) selon la revendication 1, dans laquelle
chaque élément de traction (104) comprend un moyen de libération rotatif destiné à libérer l'élément de traction de façon rotative par rapport au corps, le moyen de libération rotatif comprenant de préférence une cavité d'outil destinée à recevoir un outil de libération, ou
dans laquelle l'échelle comprend des verrous destinés à verrouiller les éléments de traction sur le corps.

5. Échelle de dépannage de véhicule (100) selon la revendication 1, dans laquelle chaque élément de traction (104) comprend un inhibiteur (304) destiné à inhibiter la libération accidentelle de l'élément de traction (104) par rapport au corps (102) ; dans lequel l'inhibiteur (304) comprend de préférence une ou plusieurs formations telles qu'une langue ou une rainure.

6. Échelle de dépannage de véhicule (100) selon la revendication 1, dans laquelle chaque élément de traction (104) comprend une jupe (200) à partir de laquelle s'étend une dent (202), dans lequel le filetage (300) de chaque élément de traction (104) se trouve de préférence au-dessus ou en dessous de la jupe (200).

7. Procédé de réparation d'un élément de traction (104) endommagé d'une échelle de dépannage de véhicule (100) selon l'une des revendications 1 à 6, le procédé comprenant :
la libération de l'élément de traction (104) par rapport à un corps (102) de l'échelle (100).

8. Procédé selon la revendication 7, dans laquelle l'étape de libération comprend la rotation de l'élément de traction.

9. Procédé de réparation d'une échelle de dépannage de véhicule (100) selon l'une des revendications 1 à 6, le procédé comprenant les étapes suivantes :
disposition d'éléments de traction (104) dans un moule ; et
moulage d'un corps (102) pour former une liaison avec les éléments de traction (104).
